# EUROPEAN PATENT SPECIFICATION

(11) **EP 0 739 161 B1**
(45) Date of publication and mention of the grant of the patent: **20.03.2002**
(21) Application number: 95938057.7
(22) Date of filing: 08.11.1995
(51) Int. Cl.: A01K 5/02, A01K 5/00, G05D 1/02

(54) **A FEED WAGGON**
FUTTERWAGEN
WAGONNET POUR L'ALIMENTATION DU BETAIL

(30) Priority: 10.11.1994 NL 9401876
(43) Date of publication of application: 30.10.1996
(73) Proprietor: MAASLAND N.V., 3155 PD Maasland (NL)
(72) Inventor: VAN DER LELY, Cornelis, CH-6300 Zug (CH); VAN DEN BERG, Karel, NL-2971 BR Bleskensgraaf (NL)
(74) Representative: Corten, Maurice Jean F.M.
(86) International application number: PCT/NL95/00385
(87) International publication number: WO 96/14735

(56) References cited:
- EP-A- 0 456 213
- WO-A-88/09119
- WO-A-92/08343
- WO-A-92/08344
- DE-A- 2 639 423
- DE-A- 3 033 485
- FR-A- 2 682 782
- US-A- 4 330 091
- US-A- 5 069 165
- US-A- 5 255 195
- LANDTECHNIK, vol. 37, no. 9, September 1982 LEHRTE, HANNOVER DE, page 408 'Futtervorlage'

## Description

The present invention relates to a feed wagon for feeding silage, fodder and/or concentrate to animals according to the preamble of claim 1.

Such an implement is known from WO 88/09119. This feed wagon has for drawbacks that it is bound to one feeding stall, that it requires infrastructural works, i.e. a rail track, before it can be taken into operation, and that it may be difficult to adapt the feeding system to different farm situations. The present invention aims to obviate such problems, and to arrive at an advantageous feed wagon and an advantageous method of feeding animals. According to the invention, a suchlike feed wagon comprises the characterizing features of claim 1.

Automatic navigation systems are known per se from e.g. FR-A-2,682,782 or US-A-5,255,195.

According to a particular aspect of the invention, the feed wagon operates unmanned.

The invention furthermore relates to a method of automatically feeding silage and/or concentrate to animals, such as cows, according to claim 32.

For a better understanding of the present invention and to show how the same may be carried into effect, reference will now be made, by way of example, to the accompanying drawings, in which:
Figure 1 is a plan view of a possible working environment for a feed waggon according to the invention, and
Figure 2 is a side view of a feed waggon according to the invention.

In the drawings, corresponding parts are indicated by the same reference numerals. Furthermore, the invention is by no means restricted to the embodiment represented and described here; it only serves to illustrate the inventive idea.

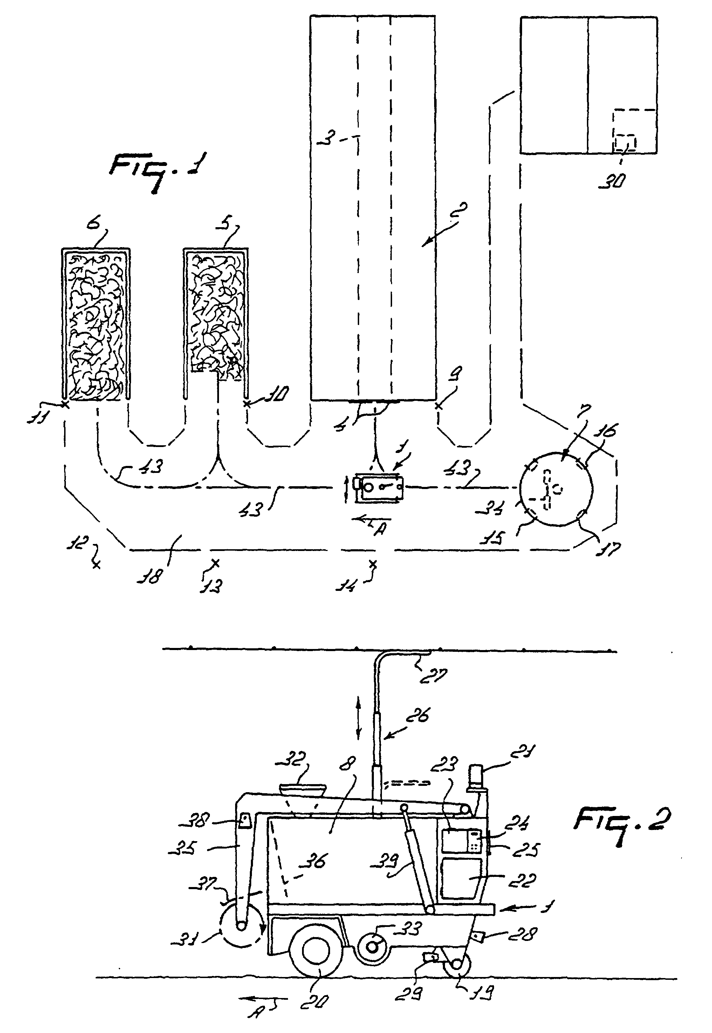

Figure 1 shows a possible working environment, in which an automatically operating feed waggon 1 of the invention is active and in which a pertinent method of feeding animals can be applied. The working environment according to the embodiment shown comprises a stable or cowshed 2, in the longitudinal direction of which there is provided a feed alley 3. The present cowshed includes stands for the animals, in which stands they stand transversely to the longitudinal direction of the cowshed 2, their heads being directed towards the feed alley 3. Adjacent to the feed alley 3, and from there to be provided with fodder, there is provided a feed station, such as a feed trough, for each of the separate animal stands. The cowshed 2 is accessible from the outside through a door 4 which, according to the present invention, is capable of being opened automatically by remote control. Furthermore, the working environment shown includes two slot silos 5, 6, in which silage is stored. By means of supports there is also provided, at a considerable distance from the ground, a standing silo 7 as a storage facility for concentrate. Figure 1 also shows, in plan view, the feed waggon 1 which is automatically movable between one or more feed loading stations 5 - 7 and one or more feed unloading stations 3. In this embodiment, these may be constituted by a slot silo 5 or 6 and/or the standing silo 7, and one or more animal stands in the feed alley 3 of the cowshed 2. During operation, the feed waggon 1 orientates itself on the beacons 9 - 17 in the working environment. These beacons 9 - 17 are each individually distinguishable and are partly constituted by existing, permanent environment elements 15 - 16, and partly by specifically arranged, physically coded beacon elements 9 - 14. In the cowshed 2 there are provided at least two (non-shown) beacons.

Figure 2 shows the automated feed waggon 1 of the invention, which waggon is capable of being used in a method of automatically feeding animals, also in accordance with the invention and as explained in what follows. The dimensions of the feed waggon are approximately: width 1 m, height 1 m and length 1.75 m. The feed waggon 1 comprises a chassis including drivable wheels 20. The present embodiment comprises three wheels, of which the two larger front wheels 20 are driven. These wheels are mounted in such a way that their shafts are in alignment. In the present embodiment, the third wheel 19, whose diameter is half that of the front wheels, is controllable by means of a computer. The feed waggon 1 comprises an almost completely closed feed box 8. This box is provided with a mixing device, which is constituted by two mixing augers in the present embodiment. With the aid of an electronic weighing device, the feed box is supported on the chassis of the feed waggon 1. Near its rear end, the feed waggon comprises a power supply 22, which is constituted by batteries in the present embodiment. In the vicinity of the power supply 22 there is provided an onboard computer 23 for controlling the various functions of the feed waggon. The feed waggon 1 is also provided with means of communication for the exchange of information and instructions with an other, e.g. stationary, central computer 30. In the present embodiment, the central computer is constituted by the business computer situated in the office part of the farmhouse. The communication between the onboard computer 23 and the other computer 30 takes place by the so-called "spread spectrum radio wave technology". In an other design according to the invention, in which the central computer is located in the cowshed 2, the communication takes place by means of infrared signals. Other input means for the onboard computer 23 are constituted by a foldably connected keyboard 24, which is suitable for use under all circumstances. This keyboard is also provided with a so-called "joy-stick", by means of which the feed waggon 1 can be manually controlled, if required, and during the programming of the route to be followed. The feed waggon 1 also includes a foldable display screen 25.

In the present embodiment, the batteries 22 of the feed waggon 1 can be charged during operation with the aid of electric charging means, here in the form of a sliding contact 26. This sliding contact is designed in the present embodiment as a three-stage telescope which, in the inactive position, disappears vertically and almost completely in the feed waggon 1. In the active position, a branched off end 27 provides a sliding contact with a supply line disposed beyond human reach. In a preferred embodiment, this supply line is mounted above the feed alley 3 of the cowshed 2. The three-stage telescope 26 is shielded by means of insulation to as far as the contact end 27.

The feed waggon 1 is provided with a detection system 21 to determine its position and to deduce its direction and speed. In the embodiment shown, this system is constituted by a rotating scanner 21. Though, in a preferred embodiment, this scanner is designed as a laser sensor, it may also be designed as an ultrasonic one. With the aid of the scanner 21, the beacons 9 - 17 in the farmyard, being distinguishable from each other and being inputted in the onboard computer 23, are identified. Furthermore, ultrasonic sensors are provided along the circumference of the feed waggon 1. These sensors serve to measure, below the level of the scanner 21, the distance to unexpected, inanimate objects or obstacles, and to ensure security in this respect. Additionally, the feed waggon 1 is provided with passive infrared detectors 28 directed forwards and backwards for the detection of unexpected, animate objects. These detectors are focussed on an immediately neighbouring part of the path chosen by the feed waggon 1. In a preferred embodiment, the feed waggon 1 also includes a passive infrared detector 29 covering the soil part under the feed waggon 1, preferably from near the rear wheel. In a non-shown embodiment, the feed waggon also comprises a railing surrounding it at a height of approximately 30 cms, this railing being on all sides provided with a flexibly enveloped so-called make-contact; compression thereof results in the feed waggon 1 being put out of operation. This embodiment is also provided with means for moving such a security element in the longitudinal direction of the vehicle, e.g. when the vehicle has necessarily to be positioned close to a known object, inter alia the silage. At the sides, the security element extends relatively close along the feed waggon and, at its front and back, at a distance of approximately 40 cms. Furthermore, the feed waggon comprises an electronic levelling device for the detection of a non-horizontal position thereof. Upon detection of the latter condition, the feed waggon is automatically put out of operation and a still to be described alarm signal is given.

The feed waggon 1 is furthermore provided with an infrared transmitter capable of cooperating with a receiver of a system for automatically opening one or more doors 4 of the cowshed 2, or other suitable openings for allowing the feed waggon 1 to pass. In an alternative embodiment, the opening of the door is effected by means of the central computer 30. With the aid of one of the two systems for opening the stable door 4, the opening and closing is effected during operation in such a manner that the time of opening will be as short as possible. The onboard computer 23 or the central computer 30 will take into account the actual forward speed of the feed waggon and the time of opening required for the stable door 4.

Furthermore, the feed waggon 1 comprises automatically operating loading and unloading systems including loading and unloading means 31 - 33. The loading system shown in the embodiment includes loading means for loading concentrate from a silo 7 ending at some level above the soil. The loading system also comprises a loading member 31, 35 for taking ensilaged bulkage from silage silos or from so-called slot silos 5, 6. For the purpose of loading concentrate, the feed waggon comprises a funnel-shaped collecting element 32 and a (non-shown) control element for the opening of a slide of the standing silo 7. This control element is designed to include so-called actuators, but may also be designed to include hydraulic cylinders. To that end, the feed waggon is equipped with an hydraulic circuit comprising an electrically driven pump. In the present embodiment, a lever 34 of the slide is operated by means of this system. The loading system for silage comprises an arm 35, which is pivotable about a shaft disposed transversely to the direction of travel A and near the rear end of the feed waggon, for an exsilage member 31, by means of which bulkage is cut loose from the silo or the slot silos 5, 6. In the embodiment shown, the exsilage member 31 is constituted by a rotating cutting member that is electrically driven by the batteries. The direction of rotation of the cutting member is such that a tangent line at the top of the element is turned towards the feed waggon. In cooperation with a guide plate 37 provided above the exsilage member 31, a flow of bulkage is effected in the direction of the feed waggon. This flow is guided downwardly to the mixing augers arranged in the lower part of the feed box 8 by an obliquely positioned rear wall 36 thereof, forming a rebound plate. In an alternative (non-shown) embodiment, the feed waggon 1 comprises a shovel member to shovel up cut loose silage and to guide same e.g. to a grating-covered opening in the top of the feed box 8.

In addition to the said passive infrared detectors, the feed waggon 1 comprises near its front a passive infrared detector 38, which is directed to the pivotal range of the exsilage member 31 or of a possibly arranged shovel element. In an advantageous embodiment, such a detector 38 is disposed extending telescopically near the top of the feed waggon, so that the risk of contamination is minimal. In the embodiment shown, the detector 38 is situated near the buckle in the arms 35 and the detection range is directed to the downward bent part of these arms in such a way that the detection range covers, in all positions of the arm 35, the exsilage member 31 as well as the inlet opening near the bottom of the rear wall 36 of the feed box 8.

In the embodiment shown, the unloading means of the feed waggon 1 are constituted by two augers 33 arranged transversely to the longitudinal direction of the feed waggon. Each of these is turned towards and beyond a lateral side of the feed box 8. After the automatic opening of a slide in the bottom of the feed box 8, fodder is admitted into the augers. In the present embodiment, an auger 33, also driven by the batteries 22 of the feed waggon 1, is pivotable about a shaft disposed in longitudinal direction near the said opening in the bottom of the feed waggon 1 in such a way that feed troughs of different heights can be filled up.

Hereafter the operation in practice of the feed waggon and the method according to the invention will be set out in further detail.

The data relating to all the beacons 9 - 17 placed in the working environment, together with those of the objects 2, 5 - 7 or the driving path 18 and the dimensions thereof, have been inputted in the onboard computer 23 of the feed waggon 1. On the basis thereof and because of the fact that all the beacons 9 - 17 are different, the onboard computer 23 will deduce e.g. that the beacons 10 and 11 indicate the beginning of the outermost walls of two slot silos 5 and 6, while the width of the slot silos 5 and 6, and consequently the position of their unmarked walls, are known to the onboard computer 23. Such dimensions and positions of the beacons 9 - 17 have to be inputted or programmed by the farmer only once, when the feed waggon is brought into use. This is effected by means of a ride accompanied by the farmer, during which the feed waggon is manually guided along the route 43 desired by the farmer, and the objects detected by the scanner 21 and being appropriate to serve as beacon, are chosen by the farmer, i.e. they are recorded in the computer 23. The established route 43 is adopted in the memory of the onboard computer 23 as the ideal route which, whenever the working environment changes, can be renewed in the described way. Following the established route 43, the feed waggon makes as many rides as required for the feed supply or as needed according to the central computer, on an in principle continuous basis.

In the present embodiment, the starting point of the route 43 is situated in the cowshed 2 near the doors 4. From that point the feed waggon 1 will orientate itself each time on the two nearest detected beacons, e.g. the beacon 14 arranged in alignment with the longitudinal middle of the cowshed and a non-represented beacon thereinside. After having left the cowshed 2, the feed waggon turns to the right and then to the right again to drive into a slot silo 5, 6; upon driving into the slot silo 5, 6, the place will be taken into account where silage has been taken during a previous ride, so that the silo 5, 6 is exsilaged in a regular way. Then the feed waggon reverses and, after turning, moves in the forward direction to the concentrate silo 7. On the route, each time the two beacons that are detected as nearest will be used for the computerized determination of the position, the orientation and the driving speed of the feed waggon 1, in which connection the supports 15 - 17 of the concentrate silo 7 may be marked as beacons as well.

When the exsilaging has started, the passive infrared detector 38 turned to the pivotal range of the arm 35 is activated by the onboard computer 23, thus preventing human beings or animals present within the said range on or in front of the silage from being hit by the exsilage member 31. A (non-shown) ultrasonic sensor is also focussed on this range. In case of detection of an unexpected inanimate object, an attention signal is given to the farmer by means of communication with the central computer. In the present embodiment, this signal consists of a paper print and/or a message on the display screen of the central computer 30. Subsequently a different exsilage position is taken in the same slot silo 5, 6. When the feed waggon has no longer access to an other exsilage place, an alarm signal is given to the farmer. In the present embodiment, this means that, in addition to the attention signal, the farmer is alerted by a portable alarm means, constituted by a radiophone in this embodiment. When the infrared sensor detects an unexpected animate object, the onboard computer 23 will transmit a warning signal by means of a sound producing element disposed on the feed waggon 1. In the present embodiment, this sound signal comprises a text: "Your position is too close to this vehicle. Please keep away". When this signal has no effect, the detected object may be an escaped animal or a human being having become unwell, and the onboard computer 23 will give an already described alarm signal. After having given an alarm signal, the feed waggon 1 always takes an inactive position. This position can only be changed by the farmer by means of the onboard computer 23. When the feed waggon 1 meets with an unexpected object on its route 43, a calculation is made, on the basis of the defined position of the feed waggon and the width of the driving path 18 known to the computer, whether or not there is enough room left to manoeuvre around the object. When this is not the case, the described alarm procedure will be followed.

For the purpose of loading bulkage, the arm 35 is raised into a position above the silage by means of the hydraulic cylinders 39, and the mixing waggon is subsequently driven closer thereto. Subsequently in a first blow, an exsilage blow is made over a half of the width of the feed waggon 1, whereupon the arm 35 is raised again and the exsilage element 31 is shifted along its axis of rotation to the other half of the feed waggon for a second loading blow. When necessary, several blows are made after the feed waggon has moved over a distance of approximately half the cutting member 31 in the direction of the silo. During the blow, the guide element 37 is automatically repositioned in such a way that it guides, in the upper position, the flow of material downward to the bottom of the feed box 8, and, in the lower position, the flow of material upward to the obliquely arranged backwall 36 of the feed box 8. In the present embodiment, the edge of the guide plate 37 turned to the silo consists of stiff, resilient material. This edge moves during the blow along the newly created wall of the silo. Consequently, the quantity of bulkage that is flung away vertically is almost nil. The construction in parts of the exsilage element 31 has the advantage of keeping the charge of the batteries 22 low.

On approaching the concentrate silo 7, the feed waggon 1 manoeuvres in such a way that the funnel-shaped opening 32 is positioned under the outflow opening thereof. In the present embodiment, the lid or slide of the concentrate silo 7 is operated by means of a lever 34 that is pivotably arranged about a horizontal shaft; the operating means for opening the concentrate silo are constituted by two vertically extending operating elements, each disposed near a side of the feed waggon 1. These are provided near their free ends with a T-piece extending transversely to the lever of the concentrate silo. One end of the lever 34 of the concentrate silo is pushed up by means of one operating element for the opening of the silo lid, and the other, opposite end of the lever 34 is pushed up by the other operating element for its closing. The time during which the silo lid is kept open by the feed waggon is defined by the onboard computer 23 in cooperation with the weighing device provided for the feed box 8. The quantity of concentrate being loaded is based on an indicated mixture ratio and is related to the already loaded quantity of bulkage.

After having been loaded, the concentrate is mixed with the bulkage in the feed box 8. In the present embodiment, the mixing takes place during the ride to the cowshed 2. The starting point for the unloading of the mixed feed is established in a combination of the to be defined position of the feed waggon in the cowshed 2 and the latest unloading place recorded in the memory of the onboard computer during the previous ride; the route to be followed by the feed waggon 1 in the cowshed being a fixed one. However, the feed waggon 1 is also adjustable in a method, in which the waggon deposits the feed at animal stands situated at some distance from each other and in which the feed waggon 1 can constantly be instructed by the central computer 23 regarding the stands to be provided with feed.

During its route in the cowshed 2, the feed waggon 1 is connected with a supply line through the sliding contact 26 or, in an other embodiment, with a feeding cable. In the latter case, the sliding contact 26 consists of a T-piece, of which the upper part is directed transversely to the cable, i.e. to the driving direction of the feed waggon 1. The presence of the feed waggon 1 in the cowshed 2 having been ascertained, the sliding contact 26 is automatically extended for the purpose.

In an alternative embodiment of the feed waggon according to the invention, it includes a sensor for tracking a cable, which is fitted in or on the soil and indicates the route to be followed by the feed waggon 1, the latter being provided with loading means cooperating with an exsilage device arranged in the slot silo and capable of being moved in the longitudinal and lateral direction thereof. The said exsilage device comprises transferring means having a variable reach for the transfer into the feed waggon of cut loose silage. The exsilage device is activated and disactivated by the feed waggon 1. In again an other embodiment according to the invention, the feed waggon is not capable of being displaced along a cable, but along a rail system.

The invention furthermore relates to all sorts of alternatives in the construction, of course, being within the scope of the following claims.

## Claims

1. A feed wagon for feeding silage, fodder and/or concentrate to animals, such as cows, capable of being automatically moved between one or more feed loading stations (5 - 7) and one or more feed unloading stations, **characterized in that** the feed wagon includes an automatic navigation system comprising a detection device (21) for the detection of passive beacons (9 - 17), such as certain environmental identification marks.

2. A feed wagon as claimed in claim 1, **characterized in that** the feed wagon (1) is electrically driven and is provided with batteries (22).

3. A feed wagon as claimed in claim 1 or 2, **characterized in that** the feed wagon (1) includes electric means (26), e.g. a sliding contact.

4. A feed wagon as claimed in one or more of the preceding claims, **characterized in that** the batteries, during a part of the route (43), are recharged in the cowshed (2).

5. A feed wagon as claimed in one or more of the preceding claims, **characterized in that** the feed wagon (1) comprises an onboard computer (23).

6. A feed wagon as claimed in one or more of the preceding claims, **characterized in that** the feed wagon (1) includes a computer-controlled, automatic steering device.

7. A feed wagon as claimed in one or more of the preceding claims, **characterized in that** the feed wagon comprises means of communication including a stationary computer.

8. A feed wagon as claimed in one or more of the preceding claims, **characterized in that** the detection device is constituted by a scanner rotating about a vertical shaft.

9. A feed wagon as claimed in one or more of the preceding claims, **characterized in that** the scanner is a laser sensor.

10. A feed wagon as claimed in one or more of the preceding claims, **characterized in that** the scanner is an ultrasonic sensor.

11. A feed wagon as claimed in one or more of the preceding claims, **characterized in that** the feed wagon (1) comprises security means for putting the feed wagon out of operation in case of an accident.

12. A feed wagon as claimed in one or more of the preceding claims, **characterized in that** the security means comprise ultrasonic sensors.

13. A feed wagon as claimed in one or more of the preceding claims, **characterized in that** the security means comprise an electronic levelling device.

14. A feed wagon as claimed in one or more of the preceding claims, **characterized in that** the security means comprise a railing surrounding the feed wagon in plan view and including a make-contact.

15. A feed wagon as claimed in one or more of the preceding claims, **characterized in that** the security means comprise a passive infrared sensor which is orientated in the direction of travel (A) and is adjustable at a maximal effectiveness between 1 and 4 m, and preferably approximately 2 m, in front of the wagon (1).

16. A feed wagon as claimed in one or more of the preceding claims, **characterized in that** the passive infrared sensor is active at least to a height of approximately 20 cms above the soil.

17. A feed wagon as claimed in one or more of the preceding claims, **characterized in that** the security means comprise at least one infrared sensor (29) covering the room under the feed wagon.

18. A feed wagon as claimed in one or more of the preceding claims, **characterized in that** the feed wagon (1) comprises a loading device (31, 32) and a loading shovel connected to hydraulically movable arms (35).

19. A feed wagon as claimed in one or more of the preceding claims, **characterized in that** the loading device (31, 32) comprises a cutting device (31) connected to hydraulically movable arms (35).

20. A feed wagon as claimed in one or more of the preceding claims, **characterized in that** the loading device (31, 32) comprises a passive infrared sensor (38) focussed on the room surrounding the loading member (31).

21. A feed wagon as claimed in one or more of the preceding claims, **characterized in that** the feed wagon (1) comprises an electronic weighing device connected with the onboard computer (23) for weighing the feed loaded.

22. A feed wagon as claimed in one or more of the preceding claims, **characterized in that** the feed wagon (1) comprises operating means for opening and closing the outflow opening, in particular the dosage slide of a concentrate silo (7).

23. A feed wagon as claimed in one or more of the preceding claims, **characterized in that** the operating means are controlled by the onboard computer (23).

24. A feed wagon as claimed in one or more of the preceding claims, **characterized in that** the feed wagon (1) comprises a mixing device.

25. A feed wagon as claimed in one or more of the preceding claims, **characterized in that** the feed wagon (1) comprises automatically controllable unloading means (33).

26. A feed wagon as claimed in one or more of the preceding claims, **characterized in that** the feed wagon (1) is provided at two lateral sides with unloading means (33).

27. A feed wagon as claimed in one or more of the preceding claims, **characterized in that** the feed wagon comprises two driven front wheels (20) and a rear steering wheel (19).

28. A feed wagon as claimed in one or more of the preceding claims, **characterized in that** at least one wheel (19) is provided with a measuring device for measuring the covered route.

29. A feed wagon as claimed in one or more of the preceding claims, **characterized in that** the feed wagon (1) operates as an unmanned one.

30. A feed wagon as claimed in one or more of the preceding claims, **characterized in that** the feed wagon (1) comprises a feed box (8) arranged substantially near the front wheels (20) and a rear part including the batteries (22) and the onboard computer (23).

31. A feed wagon as claimed in one or more of the preceding claims, **characterized in that** the width of the cutting device is less than that of the feed wagon.

32. A method of automatically feeding silage and/or concentrate to animals, such as cows, in which method the feed is transported from a feed loading station (5 - 7) to a feed unloading station, on an almost continuous basis, in small quantities and with the aid of a feed wagon (1) that is capable of being moved automatically, said feed wagon including an automatic navigation system comprising a detection device (21) for the detection of passive beacons (9 - 17), such as certain environmental identification marks.

## Patentansprüche

1. Futterwagen zum Verfüttern von Silage, Futter und/oder Kraftfutter an Tiere, wie z. B. Kühe, der automatisch zwischen einer oder mehreren Futterladestationen (5 bis 7) und einer oder mehreren Futterentladestationen bewegt werden kann, **dadurch gekennzeichnet, daß** der Futterwagen ein automatisches Navigationssystem enthält, das eine Detektionsvorrichtung (21) zum Detektieren von passiven Baken (9 bis 17), wie z. B. bestimmten Erkennungszeichen in der Umgebung, umfaßt.

2. Futterwagen nach Anspruch 1,
**dadurch gekennzeichnet, daß** der Futterwagen (1) elektrisch angetrieben und mit Batterien (22) versehen ist.

3. Futterwagen nach Anspruch 1 oder 2,
**dadurch gekennzeichnet, daß** der Futterwagen (1) eine elektrische Vorrichtung (26), wie z. B. einen Schleifkontakt, enthält.

4. Futterwagen nach einem oder mehreren der vorhergehenden Ansprüche,
**dadurch gekennzeichnet, daß** die Batterien während eines Teiles der Fahrstrecke (43) in dem Kuhstall (2) wiederaufgeladen werden.

5. Futterwagen nach einem oder mehreren der vorhergehenden Ansprüche,
**dadurch gekennzeichnet, daß** der Futterwagen (1) einen Bordcomputer (23) umfaßt.

6. Futterwagen nach einem oder mehreren der vorhergehenden Ansprüche,
**dadurch gekennzeichnet, daß** der Futterwagen (1) eine rechnergesteuerte automatische Steuervorrichtung enthält.

7. Futterwagen nach einem oder mehreren der vorhergehenden Ansprüche,
**dadurch gekennzeichnet, daß** der Futterwagen eine Kommunikationsvorrichtung mit einem stationären Computer umfaßt.

8. Futterwagen nach einem oder mehreren der vorhergehenden Ansprüche,
**dadurch gekennzeichnet, daß** die Detektionsvorrichtung durch einen Scanner gebildet ist, der sich um eine vertikale Achse dreht.

9. Futterwagen nach einem oder mehreren der vorhergehenden Ansprüche,
**dadurch gekennzeichnet, daß** der Scanner ein Lasersensor ist.

10. Futterwagen nach einem oder mehreren der vorhergehenden Ansprüche,
**dadurch gekennzeichnet, daß** der Scanner ein Ultraschallsensor ist.

11. Futterwagen nach einem oder mehreren der vorhergehenden Ansprüche,
**dadurch gekennzeichnet, daß** der Futterwagen (1) eine Sicherheitsvorrichtung umfaßt, um den Futterwagen bei einem Unfall außer Betrieb zu setzen.

12. Futterwagen nach einem oder mehreren der vorhergehenden Ansprüche,
**dadurch gekennzeichnet, daß** die Sicherheitsvorrichtung Ultraschallsensoren umfaßt.

13. Futterwagen nach einem oder mehreren der vorhergehenden Ansprüche,
**dadurch gekennzeichnet, daß** die Sicherheitsvorrichtung eine elektronische Nivellierungsvorrichtung umfaßt.

14. Futterwagen nach einem oder mehreren der vorhergehenden Ansprüche,
**dadurch gekennzeichnet, daß** die Sicherheitsvorrichtung eine Einfassung umfaßt, die in Draufsicht betrachtet den Futterwagen umgibt und einen Schließkontakt enthält.

15. Futterwagen nach einem oder mehreren der vorhergehenden Ansprüche,
**dadurch gekennzeichnet, daß** die Sicherheitsvorrichtung einen passiven Infrarotsensor umfaßt, der in Arbeitsrichtung (A) ausgerichtet ist und auf einen maximalen Wirksamkeitsgrad zwischen 1 und 4 m und vorzugsweise etwa 2 m vor dem Wagen (1) einstellbar ist.

16. Futterwagen nach einem oder mehreren der vorhergehenden Ansprüche,
**dadurch gekennzeichnet, daß** der passive Infrarotsensor mindestens bis zu einer Höhe von etwa 20 cm über dem Boden wirksam ist.

17. Futterwagen nach einem oder mehreren der vorhergehenden Ansprüche,
**dadurch gekennzeichnet, daß** die Sicherheitsvorrichtung mindestens einen Infrarotsensor (29) umfaßt, der den Raum unter dem Futterwagen abdeckt.

18. Futterwagen nach einem oder mehreren der vorhergehenden Ansprüche,
**dadurch gekennzeichnet, daß** der Futterwagen (1) eine Ladevorrichtung (31, 32) und eine Ladeschaufel umfaßt, die mit hydraulisch bewegbaren Armen (35) verbunden sind.

19. Futterwagen nach einem oder mehreren der vorhergehenden Ansprüche,
**dadurch gekennzeichnet, daß** die Ladevorrichtung (31, 32) eine Schneidvorrichtung (31) umfaßt, die mit hydraulisch bewegbaren Armen (35) verbunden ist.

20. Futterwagen nach einem oder mehreren der vorhergehenden Ansprüche,
**dadurch gekennzeichnet, daß** die Ladevorrichtung (31, 32) einen passiven Infrarotsensor (38) umfaßt, der auf den das Ladeglied (31) umgebenden Raum eingestellt ist.

21. Futterwagen nach einem oder mehreren der vorhergehenden Ansprüche,
**dadurch gekennzeichnet, daß** der Futterwagen (1) eine mit dem Bordcomputer (23) verbundene elektronische Wägevorrichtung zum Wägen des geladenen Futters umfaßt.

22. Futterwagen nach einem oder mehreren der vorhergehenden Ansprüche,
**dadurch gekennzeichnet, daß** der Futterwagen (1) Betätigungsvorrichtungen zum Öffnen und Schließen der Auslaßöffnung, insbesondere des Dosierschiebers eines Kraftfuttersilos (7), umfaßt.

23. Futterwagen nach einem oder mehreren der vorhergehenden Ansprüche,
**dadurch gekennzeichnet, daß** die Betätigungsvorrichtungen von dem Bordcomputer (23) gesteuert werden.

24. Futterwagen nach einem oder mehreren der vorhergehenden Ansprüche,
**dadurch gekennzeichnet, daß** der Futterwagen (1) eine Mischvorrichtung umfaßt.

25. Futterwagen nach einem oder mehreren der vorhergehenden Ansprüche,
**dadurch gekennzeichnet, daß** der Futterwagen (1) automatisch steuerbare Entladevorrichtungen (33) umfaßt.

26. Futterwagen nach einem oder mehreren der vorhergehenden Ansprüche,
**dadurch gekennzeichnet, daß** der Futterwagen (1) an zwei Längsseiten mit Entladevorrichtungen (33) versehen ist.

27. Futterwagen nach einem oder mehreren der vorhergehenden Ansprüche,
**dadurch gekennzeichnet, daß** der Futterwagen zwei angetriebene Vorderräder (20) und ein hinteres Lenkungsrad (19) umfaßt.

28. Futterwagen nach einem oder mehreren der vorhergehenden Ansprüche,
**dadurch gekennzeichnet, daß** mindestens ein Rad (19) mit einer Meßvorrichtung zum Messen der zurückgelegten Strecke versehen ist.

29. Futterwagen nach einem oder mehreren der vorhergehenden Ansprüche,
**dadurch gekennzeichnet, daß** der Futterwagen (1) unbemannt arbeitet.

30. Futterwagen nach einem oder mehreren der vorhergehenden Ansprüche,
**dadurch gekennzeichnet, daß** der Futterwagen (1) einen im wesentlichen nahe den Vorderrädern (20) angeordneten Futterkasten (8) und einen die Batterien (22) und den Bordcomputer (23) enthaltenden hinteren Teil umfaßt.

31. Futterwagen nach einem oder mehreren der vorhergehenden Ansprüche,
**dadurch gekennzeichnet, daß** die Breite der Schneidvorrichtung geringer ist als die des Futterwagens.

32. Verfahren zum automatischen Verfüttern von Silage und/oder Kraftfutter an Tiere, wie z. B. Kühe, bei dem das Futter nahezu ununterbrochen in kleinen Mengen und mit Hilfe eines automatisch bewegbaren Futterwagens (1) von einer Futterladestation (5 bis 7) zu einer Futterentladestation befördert wird, wobei der Futterwagen ein automatisches Navigationssystem enthält, das eine Detektionsvorrichtung (21) zum Detektieren von passiven Baken (9 bis 17), wie z. B. bestimmten Erkennungszeichen in der Umgebung, umfaßt.

## Revendications

1. Wagonnet d'alimentation pour distribuer de l'ensilage, du fourrage et/ou du concentré à des animaux, tels que des vaches, pouvant être automatiquement déplacé entre une ou plusieurs station(s) de chargement des aliments (5, 7) et une ou plusieurs station(s) de déchargement des aliments, **caractérisé en ce que** le wagonnet d'alimentation comprend un système de navigation automatique équipé d'un système de détection (21) pour la détection de balises passives (9, 17), telles que des repères d'identification environnementaux déterminés.

2. Wagonnet d'alimentation selon la revendication 1, **caractérisé en ce que** le wagonnet d'alimentation (1) fonctionne électriquement et est équipé de batteries (22).

3. Wagonnet d'alimentation selon la revendication 1 ou 2, **caractérisé en ce que** le wagonnet d'alimentation (1) comprend des moyens électriques (26), comme un contact glissant.

4. Wagonnet d'alimentation selon ou plusieurs des revendications précédentes, **caractérisé en ce que** les batteries, pendant une partie de l'itinéraire (43), sont rechargées dans l'étable (2).

5. Wagonnet d'alimentation selon une ou plusieurs des revendications précédentes, **caractérisé en ce que** le wagonnet d'alimentation (1) comprend un ordinateur de bord (23).

6. Wagonnet d'alimentation selon une ou plusieurs des revendications précédentes, **caractérisé en ce que** le wagonnet d'alimentation (1) comprend un dispositif à pilotage automatique commandé par ordinateur.

7. Wagonnet d'alimentation selon une ou plusieurs des revendications précédentes, **caractérisé en ce que** le wagonnet d'alimentation est équipé de moyens de communication comprenant un ordinateur fixe.

8. Wagonnet d'alimentation selon une ou plusieurs des revendications précédentes, **caractérisé en ce que** le dispositif de détection est constitué d'un scanner tournant autour d'un axe vertical.

9. Wagonnet d'alimentation selon une ou plusieurs des revendications précédentes, **caractérisé en ce que** le scanner est un capteur laser.

10. Wagonnet d'alimentation selon une ou plusieurs des revendications précédentes, **caractérisé en ce que** le scanner est un capteur à ultrasons.

11. Wagonnet d'alimentation selon une ou plusieurs des revendications précédentes, **caractérisé en ce que** le wagonnet d'alimentation (1) comprend des moyens de sécurité permettant de mettre le wagonnet d'alimentation hors fonctionnement en cas d'accident.

12. Wagonnet d'alimentation selon une ou plusieurs des revendications précédentes, **caractérisé en ce que** les moyens de sécurité comprennent des capteurs à ultrasons.

13. Wagonnet d'alimentation selon une ou plusieurs des revendications précédentes, **caractérisé en ce que** les moyens de sécurité comprennent un dispositif correcteur de niveau électronique.

14. Wagonnet d'alimentation selon une ou plusieurs des revendications précédentes, **caractérisé en ce que** les moyens de sécurité comprennent un garde-corps entourant le wagonnet d'alimentation en vue en plan et possédant un contact de fermeture.

15. Wagonnet d'alimentation selon une ou plusieurs des revendications précédentes, **caractérisé en ce que** les moyens de sécurité comprennent un capteur infrarouge passif qui est orienté dans le sens du déplacement (A) et est réglable à une efficacité maximale comprise entre 1 et 4 m, et de préférence de 2 m environ, en face du wagonnet (1).

16. Wagonnet d'alimentation selon une ou plusieurs des revendications précédentes, **caractérisé en ce que** le capteur infrarouge passif est actif au moins jusqu'à une hauteur d'environ 20 cm au-dessus du sol.

17. Wagonnet d'alimentation selon une ou plusieurs des revendications précédentes, **caractérisé en ce que** les moyens de sécurité comprennent au moins un capteur infrarouge (29) couvrant la pièce en dessous du wagonnet d'alimentation.

18. Wagonnet d'alimentation selon une ou plusieurs des revendications précédentes, **caractérisé en ce que** le wagonnet d'alimentation (1) comprend un dispositif de chargement (31, 32) et une pelle chargeuse raccordés à des bras à commande hydraulique (35).

19. Wagonnet d'alimentation selon une ou plusieurs des revendications précédentes, **caractérisé en ce que** le dispositif de chargement (31, 32) comprend un dispositif de coupe (31) raccordé à des bras à commande hydraulique (35).

20. Wagonnet d'alimentation selon une ou plusieurs des revendications précédentes, **caractérisé en ce que** le dispositif de chargement (31, 32) comprend un capteur infrarouge passif (38) concentré sur la pièce entourant l'élément de chargement (31).

21. Wagonnet d'alimentation selon une ou plusieurs des revendications précédentes, **caractérisé en ce que** le wagon d'alimentation (1) comprend un dispositif de pesage électronique connecté à l'ordinateur de bord (23) pour peser les aliments chargés.

22. Wagonnet d'alimentation selon une ou plusieurs des revendications précédentes, **caractérisé en ce que** le wagonnet d'alimentation (1) comprend des moyens de fonctionnement pour ouvrir et fermer l'orifice d'écoulement, en particulier la glissière de dosage d'un silo de concentré (7).

23. Wagonnet d'alimentation selon une ou plusieurs des revendications précédentes, **caractérisé en ce que** les moyens de fonctionnement sont commandés par l'ordinateur de bord (23).

24. Wagonnet d'alimentation selon une ou plusieurs des revendications précédentes, **caractérisé en ce que** le wagonnet d'alimentation (1) comprend un dispositif mélangeur.

25. Wagonnet d'alimentation selon une ou plusieurs des revendications précédentes, **caractérisé en ce que** le wagonnet d'alimentation (1) comprend des moyens de déchargement à commande automatique (33).

26. Wagonnet d'alimentation selon une ou plusieurs des revendications précédentes, **caractérisé en ce que** le wagonnet d'alimentation (1) est équipé de moyens de déchargement (33) au niveau de deux côtés latéraux.

27. Wagonnet d'alimentation selon une ou plusieurs des revendications précédentes, **caractérisé en ce que** le wagonnet d'alimentation possède deux roues d'entraînement avant (20) et une roue directrice arrière (19).

28. Wagonnet d'alimentation selon une ou plusieurs des revendications précédentes, **caractérisé en ce qu'**au moins une roue (19) est équipée d'un dispositif de mesure pour mesurer l'itinéraire couvert.

29. Wagonnet d'alimentation selon une ou plusieurs des revendications précédentes, **caractérisé en ce que** le wagonnet d'alimentation (1) fonctionne comme un wagonnet automatique.

30. Wagonnet d'alimentation selon une ou plusieurs des revendications précédentes, **caractérisé en ce que** le wagonnet d'alimentation (1) comprend un bac d'alimentation (8) situé sensiblement près des roues avant (20) et une partie arrière logeant les batteries (22) et l'ordinateur de bord (23).

31. Wagonnet d'alimentation selon une ou plusieurs des revendications précédentes, **caractérisé en ce que** la largeur du dispositif de coupe est inférieure à celle du wagonnet d'alimentation.

32. Procédé permettant de distribuer de l'ensilage et/ou du concentré du bétail, tel que des vaches, selon lequel les aliments sont transportés à partir d'une station de chargement des aliments (5-7) vers une station de déchargement des aliments, sur une base presque continue, par petites quantités et avec l'aide d'un wagonnet d'alimentation (1) qui peut être déplacé automatiquement, ledit wagonnet d'alimentation comprenant un système de navigation automatique possédant un dispositif de détection (21) pour la détection de balises passives (9-17), telles que des repères d'identification environnementaux déterminés.
